# EUROPEAN PATENT SPECIFICATION

(11) **EP 3 934 921 B1**
(45) Date of publication and mention of the grant of the patent: **06.08.2025**
(21) Application number: 20765855.0
(22) Date of filing: 07.03.2020
(51) Int. Cl.: B60B 21/02, B60B 21/00, B60B 1/00, B60B 5/02, B60B 1/06

(54) **A RIM FOR A WHEEL**
FELGE FÜR EIN RAD
JANTE POUR ROUE

(30) Priority: 07.03.2019 AU 2019900746
(43) Date of publication of application: 12.01.2022
(73) Proprietor: Southall, Timothy, Clarence Park, South Australia 5034 (AU)
(72) Inventor: Southall, Timothy, Clarence Park, South Australia 5034 (AU)
(74) Representative: JENSEN & SON
(86) International application number: PCT/AU2020/050218
(87) International publication number: WO 2020/176951

(56) References cited:
- EP-A1- 1 894 744
- EP-A2- 1 016 552
- DE-U1- 20 202 273
- US-A- 6 086 161
- US-A1- 2008 054 712
- US-A1- 2018 117 958
- US-A1- 2018 117 958
- US-A1- 2018 201 059
- MARTY CROTTY: "Princeton carbonWorks- The Revolutionary ''Sinusoidal'' Design: A Trifecta of Benefits", 10 April 2017 (2017-04-10), XP055736356, Retrieved from the Internet <URL:https://www.princetoncarbon.com/author/marty/andhttps://www.princetoncarbon.com/news/the-revolutionary-sinusoidal-design-a-trifecta-of-benefits>

## Description

### PRIORITY DOCUMENTS

The present application claim priority from:
Australian Provisional Patent Application No. 2019900746 titled "A RIM FOR A WHEEL" and filed on 7 March 2019.

### TECHNICAL FIELD

The present disclosure relates to the rim of a wheel, and to a wheel comprising such a rim. In a particular form the present disclosure relates to the profile of a rim when viewed from the side, for a wheel of a bicycle, motorcycle, wheelchair, other wheeled vehicle, or any other function for a wheel. The present invention is applicable to a wheel that has spokes numbering from 2 to 9, in singles or pairs, wherein the spokes are designed to supply support under both compression and tension.

### BACKGROUND

A conventional wheel consists of a rim to support a tyre, a hub to support bearings connecting the wheel to the axle of the vehicle, and spokes to join the rim to the hub. The spokes may be flexible and function only under tension as is common on a bicycle wheel that commonly features 16-36 spokes, or the spokes may be rigid and function under both compression and tension as is common on street motorcycle and cars wheels.

Examples of wheels are known from EP 1016552 A2 and EP 1894744 A1.

Where a high strength to weight ratio is desirable, designers must consider many aspects of the wheel design. The rim must adequately support the tyre under forces of acceleration, braking, lateral forces from cornering, and impact forces from bumps. The spokes must effectively transfer these forces, and the weight of the vehicle and its driver/rider between the rim and the hub. The hub must be adequately strong and well designed to support the spokes and provide an efficient connection between the wheel and the bearings that rotably connect to the vehicle at the axle or mounting point. Other desirable properties of a well-designed wheel may include favourable aerodynamics, stiffness or flex, and affordable cost of manufacture.

A high strength to weight ratio enables a lighter wheel and is favourable for its positive effect on acceleration and braking performance. It also reduces the unsprung mass. Reducing unsprung mass has a positive impact on performance, handling, and comfort over bumpy terrain. Because the wheel is rotating, it is subject to gyroscopic forces that magnify the felt effect of the wheels mass as the rotation speed increases. It thus becomes highly advantageous to the handling and performance of the bicycle, motorcycle, or other wheeled vehicle, to reduce the wheels mass where possible.

It is against this background and the problems and difficulties associated therewith that the present invention has been developed.

Certain objects and advantages of the present invention will become apparent from the following description, taken in conjunction with the accompanying drawings, wherein, by way of illustration and example, an embodiment of the present invention is disclosed.

### SUMMARY

According to the present invention there is provided a wheel as defined in claim 1.

In one preferred embodiment the spokes rigidly connect the rim to the hub and provide support under forces of both compression and tension. The spoke numbers may vary from 2 to 9 and may number from 2 to 9 pairs. In a further embodiment, the wheel comprises a hub adapted to connect the wheel to a non-rotating axle or mounting point of a vehicle.

For ease of description, wheels embodying the various aspects of the present invention are described below in their usual assembled position as shown in the accompanying drawings and terms such as front, rear, upper, lower, horizontal, longitudinal et cetera may be used with reference to this usual position. However, the wheels may be manufactured, transported, sold, or used in orientations other than that described and shown here.

A detailed description of embodiments of the present invention is shown below reference to the accompanying figures that illustrate the principles of the invention. While the invention is described in connection with such embodiments, it should be understood that the invention is not limited to any embodiment. On the contrary, the scope of the invention is limited only by the appended claims and the invention encompasses numerous alternatives, modifications and equivalents. For the purpose of example, numerous specific details are set forth in the following description in order to provide a thorough understanding of the present invention.

The present invention may be practiced according to the claims without some or all of these specific details. For the purpose of clarity, technical material that is known in the technical fields related to the invention has not been described in detail so that the present invention is not unnecessarily obscured.

### BRIEF DESCRIPTION OF DRAWINGS

Embodiments of the present invention will be discussed with reference to the accompanying drawings wherein:
Figure 1 is a schematic representation of a rim for a wheel wherein the connection of the spokes to the rim is not illustrated. Tyre is illustrated;
Figure 2 is a schematic representation of a rim for a wheel wherein the connection of spokes to the rim and hub is illustrated;
Figure 3 is a schematic representation of a rim for a wheel;
Figure 4 is a schematic representation of a simply supported beam with a force applied about its mid-point;
Figure 5 is a schematic representation of a beam clamped at both ends with a force applied about half way between its mid-point and end point;

In the following description, like reference characters designate like or corresponding parts throughout the Figures.

### DESCRIPTION OF EMBODIMENTS

A conventional wheel for a bicycle or such includes a rim to support the tyre, a hub to connect the wheel rotably to the axle or mounting point of the fork / frame / or vehicle, and spokes to connect the rim to the hub. A first kind of wheel uses thin spokes to connect the rim to the hub. Spokes usually number 16 or more per wheel. The spokes are pre-tensioned, meaning that even when the wheel is not supporting any weight, the spokes are under tension. The spokes are commonly made from steel but may also be made from Titanium alloy, Aluminium alloy, composites such as carbon/epoxy, or any other material including high strength fibres. These thin spokes function under tension but provide negligible support under compression. A second kind of wheel uses spokes that provide support under tension and compression. Such spokes feature a larger diameter cross-section, and commonly number from 2 to 9 per wheel, and regularly occur in pairs ranging from 2 to 9. These spokes are often made from plastic, magnesium alloy, aluminium alloy, or composites including carbon fibre. The rim, spokes, and part of the hub can often be made in one piece and cannot be disassembled.

For the purpose of this specification, the term "rim" should be construed as being inclusive of any member whose primary function is to support the tyre and provide adequate strength to support the tyre

For the purpose of this specification, the term "hub" should be construed as being inclusive of any member whose primary function is to connect the rotatable wheel to an axle of, or mounting point of the bike or vehicle which is not rotating.

For the purpose of this specification, the term "spoke" or "spokes" should be construed as being inclusive of any member whose primary function is to connect the rim to the hub.

For the purpose of this specification, the term "depth of rim" should be construed as being the measurement from the outer diameter of the rim to the inner diameter of the rim at a cross-section viewed perpendicular to the outer diameter of the rim.

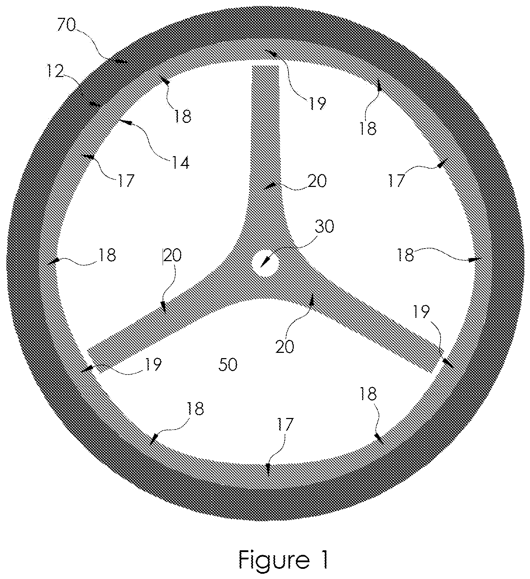

Referring now to Figure 1, there is shown a schematic representation of a rim 10 of wheel 50 according to an embodiment of the present invention. The rim 10 supports the tyre 70 and is connected to the hub 30 via spokes 20.

The rim 10 of the wheel 50 includes a midsection 17 that is deeper in its cross-section than area 19 where the spoke 20 connects, and is deeper than area 18 located between the midsection 17 and the spoke connection area 19. The spoke connection area 19 is shallower in its cross-section than the midsection 17 but deeper in its cross-section than area 18. The area 18 is shallower in its cross-section with respect to area 17 and 19.

It is to be noted that for the embodiments shown in Figures 1-3, only three spokes 20 are illustrated and described. In certain embodiments spokes may number from two to nine, or in pairs numbering from two to nine. In figure 1 the connection of spokes 20 to rim 10 is not illustrated to aid understanding of the rim 10 profile.

The profile of the rim 10 of the wheel 50 of Figure 1 is considerably unique and offers a superior strength-to-weight ratio than any known arrangement of the prior art. Stiffness and flex properties under both lateral and torsional forces are more consistent and superior also to any known arrangement of the prior art. In general terms, the depth of the rim 10, the distance between the outer diameter 12 and the inner diameter 14 at location 17 may be characterised as being between twenty and sixty percent greater than the depth of the rim 10, the distance between the outer diameter 12 and inner diameter 14 at area 18. The location of the shallowest section 18 of the rim 10 can be defined as being between 33% and 66% of the distance between the spoke connection point 19 and the midsection 17 of the rim 10.

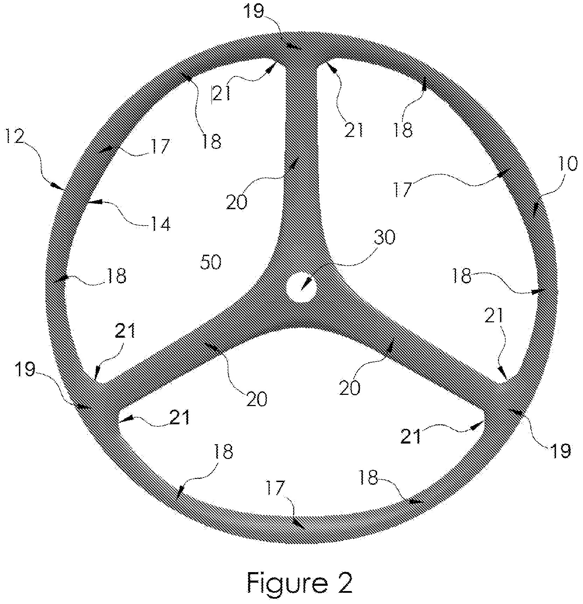

Referring now to Figure 2, there is shown a schematic representation of a rim 10 and wheel 50 according to an embodiment of the present invention. The rim 10 is connected to the hub 30 via spokes 20. The profile of the connection 21 of the spokes 20 to the rim 10 is illustrated in a manner similar to production versions of the wheel 50.

The rim 10 of the wheel 50 includes a midsection 17 that is deeper in its cross-section than area 18. The designed depth of the rim 10 at area 19 where the spoke 20 connects to the rim 10 is visibly obscured by the profile of the connection 21 of the spokes 20 to the rim 10. Area 18 of the rim is shallower in its cross-section with respect to any other area of the rim 10.

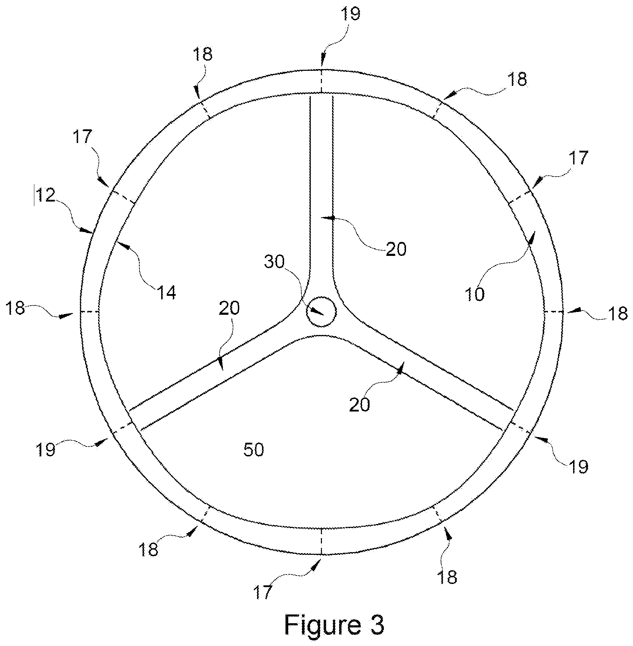

Referring now to Figure 3, there is shown a schematic representation of a rim 10 and wheel 50 according to an embodiment of the invention. Cross-section depth of the rim 10 at locations 17, 18, and 19 is here shown for clarity with a dashed line. The outer diameter 12 of the rim 10 remains constant. The distance from the outer diameter 12 to the inner diameter 14 of the rim 10 is greatest at area 17. The distance from the outer diameter 12 to the inner diameter 14 is smallest at area 18.

The benefits of the invention can be understood from two known observations of beam bending theory in physics.

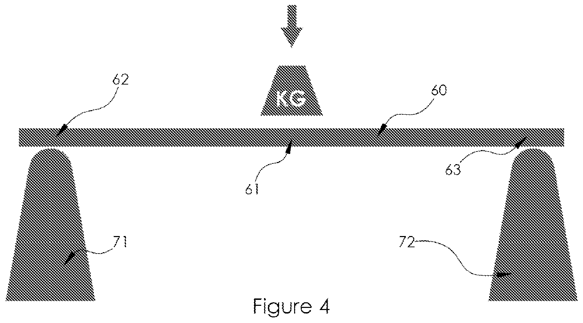

Referring now to figure 4. If a beam 60 is laid horizontally between two supports 71, 72, at either end (a simply supported beam) and equal downward forces are applied interchangeably at various locations along the beam, the centre-point 61of the beam 60 between the supports 71,72, will emerge as the most highly stressed and flexed. Optimising the strength-to-weight ratio of this beam 60, along with achieving more consistent flex characteristics can be achieved by adding depth to the cross-section of the beam 60 about the mid-section 61 while decreasing its depth about the locations 62, 63, nearest the supports 71,72.

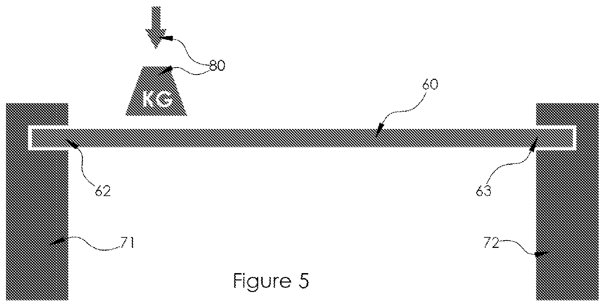

Referring now to Figure 5. If a beam 60 is laid horizontally and is clamped rigidly both top and bottom about each end 62, 63, and a downward force 80 is applied, say 25% of the distance from one end of the beam to the other, the section 62 of the beam 60 most closely located to the nearest clamp 71 will be the most flexed and highly stressed. This is because support 72 is so far away that support 71 is bearing the majority of the load. In this instance the beam 60 is acting like a cantilever beam that is only clamped and supported about one end 71. Optimising the strength-to-weight ratio of the beam 60 under this load can be achieved by adding depth to the cross-section of the beam 60 nearest the clamp area 71 while reducing the depth of the beam 60 as it nears clamp area 72.

When the above physical phenomena are combined and observed in combination with the circular profile of a rim (acting as the beam) and the spokes (acting as the supports and clamps), the rim profile 10 of the invention herein described emerges as the optimum design for strength-to-weight properties and consistencies in flex.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions without departing from the scope of the invention as set forth and defined by the following claims.

## Claims

1. A wheel having a rim (10) for supporting a tyre (70), a hub (30) and a plurality of spokes (20) having spoke connection points (19) connecting the rim (10) to the hub (30), wherein the depth of the rim (10) between its outer diameter and its inner diameter at a cross section viewed perpendicular to the outer diameter is varied, wherein
a midsection of the rim (10) approximately halfway between adjacent spoke connection points (19) has the greatest depth and
**characterised in that** an area (18) of the rim (10) between the midsection (17) and an adjacent spoke connection point (19) has the shallowest depth.

2. A wheel according to claim 1, wherein the location of the area (18) is between 33% and 66% of the distance between the midsection and the adjacent spoke connection point (19).

3. A wheel according to claim 1 or 2, wherein the depth of the rim at the midsection (17) is between 20% and 60% greater than the depth of the rim at the area (18)

4. A wheel according to any one of claims 1 to 3, wherein the spokes (20) rigidly connect the rim (10) to the hub (30) and accommodate both tensile and compressive forces.

5. A wheel according to any one of claims 1 to 4, wherein the number of spokes (20) is three.

6. A wheel according to any one of claims 1 to 4 wherein the number of spokes (20) is three pairs of spokes.

7. A wheel according to any one of claims 1 to 4, wherein the number of spokes (20) is from 2 to 9.

8. A wheel according to any one of claims 1 to 4, wherein there are from 2-9 pairs of spokes.

9. A wheel according to any one of claims 1 to 8, wherein the hub (30) is adapted to connect the wheel to a non-rotating axle or mounting point of a vehicle.

## Patentansprüche

1. Ein Rad mit einer Felge (10) zur Aufnahme eines Reifens (70), einer Nabe (30) und einer Anzahl von Speichen (20) mit Speichenverbindungspunkten (19) zur Verbindung der Felge (10) mit der Nabe (30), wobei die Tiefe der Felge (10) zwischen ihrem Außen- und Innendurchmesser an einem rechtwinklig zum Außendurchmesser betrachteten Querschnitt variiert, wobei
ein Mittelteil der Felge (10), der etwa auf halber Strecke zwischen zwei benachbarten Speichenverbindungspunkten (19) liegt, die größte Tiefe aufweist und
**dadurch gekennzeichnet, dass**
ein Bereich (18) der Felge (10) zwischen dem Mittelteil (17) und einem benachbarten Speichenverbindungspunkt (19) die geringste Tiefe aufweist.

2. Ein Rad nach Anspruch 1, wobei der Bereich (18) auf 33% bis 66% der Strecke zwischen dem Mittelteil und dem benachbarten Speichenverbindungspunkt (19) liegt.

3. Ein Rad nach Anspruch 1 oder 2, wobei die Tiefe der Felge am Mittelteil (17) um 20% bis 60% größer ist als die Tiefe der Felge im Bereich (18).

4. Ein Rad nach einem der Ansprüche 1 bis 3, wobei die Speichen (20) die Felge (10) starr mit der Nabe (30) verbinden und sowohl Zug- als auch Druckkräfte aufnehmen.

5. Ein Rad nach einem der Ansprüche 1 bis 4, wobei die Anzahl der Speichen (20) drei beträgt.

6. Ein Rad nach einem der Ansprüche 1 bis 4, wobei die Anzahl der Speichen (20) drei Speichenpaare beträgt.

7. Ein Rad nach einem der Ansprüche 1 bis 4, wobei die Anzahl der Speichen (20) zwischen 2 und 9 beträgt.

8. Ein Rad nach einem der Ansprüche 1 bis 4, wobei die Anzahl der Speichen (20) 2 bis 9 Speichenpaare beträgt.

9. Ein Rad nach einem der Ansprüche 1 bis 8, wobei die Nabe (30) darauf ausgelegt ist, das Rad mit einer nicht rotierenden Achse oder einem nicht rotierenden Montagepunkt eines Fahrzeugs zu verbinden.

## Revendications

1. Roue ayant une jante (10) pour supporter un pneu (70), un moyeu (30) et une pluralité de rayons (20) ayant des points de connexion de rayon (19) connectant la jante (10) au moyeu (30), dans laquelle la profondeur de la jante (10) entre son diamètre externe et son diamètre interne au niveau d'une section transversale visualisée perpendiculairement au diamètre externe est variée, dans laquelle une section médiane de la jante (10) approximativement à mi-chemin entre des points de connexion de rayon adjacents (19) a la profondeur la plus grande et
**caractérisée en ce que**
une zone (18) de la jante (10) entre la section médiane (17) et un point de connexion de rayon adjacent (19) a la profondeur la moins profonde.

2. Roue selon la revendication 1, dans laquelle l'emplacement de la zone (18) est entre 33 % et 66 % de la distance entre la section médiane et le point de connexion de rayon adjacent (19).

3. Roue selon la revendication 1 ou 2, dans laquelle la profondeur de la jante au niveau de la section médiane (17) est entre 20 % et 60 % supérieure à la profondeur de la jante au niveau de la zone (18).

4. Roue selon l'une quelconque des revendications 1 à 3, dans laquelle les rayons (20) connectent la jante (10) au moyeu (30) de manière rigide et répondent à des forces à la fois de traction et de compression.

5. Roue selon l'une quelconque des revendications 1 à 4, dans laquelle le nombre de rayons (20) est de trois.

6. Roue selon l'une quelconque des revendications 1 à 4, dans laquelle le nombre de rayons (20) est de trois paires de rayons.

7. Roue selon l'une quelconque des revendications 1 à 4, dans laquelle le nombre de rayons (20) va de 2 à 9.

8. Roue selon l'une quelconque des revendications 1 à 4, dans laquelle il y a de 2 à 9 paires de rayons.

9. Roue selon l'une quelconque des revendications 1 à 8, dans laquelle le moyeu (30) est adapté à connecter la roue à un essieu non rotatif ou point de montage d'un véhicule.
